# EUROPÄISCHE PATENTSCHRIFT

(11) **EP 4 173 874 B1**
(45) Veröffentlichungstag und Bekanntmachung des Hinweises auf die Patenterteilung: **20.08.2025**
(21) Anmeldenummer: 22203254.2
(22) Anmeldetag: 24.10.2022
(51) Int. Cl.: B60T 17/00

(54) **VENTILVORRICHTUNG FÜR EIN SYSTEM, INSBESONDERE FÜR EIN FAHRZEUG UND SYSTEM, INSBESONDERE BREMSSYSTEM FÜR EIN FAHRZEUG**
VALVE DEVICE FOR A SYSTEM, IN PARTICULAR FOR A VEHICLE, AND SYSTEM, IN PARTICULAR BRAKE SYSTEM FOR A VEHICLE
DISPOSITIF DE SOUPAPE POUR UN SYSTÈME, EN PARTICULIER POUR UN VÉHICULE ET SYSTÈME, EN PARTICULIER UN SYSTÈME DE FREINAGE POUR UN VÉHICULE

(30) Priorität: 27.10.2021 DE 102021127910
(43) Veröffentlichungstag der Anmeldung: 03.05.2023
(73) Patentinhaber: KNORR-BREMSE Systeme für Nutzfahrzeuge GmbH, 80809 München (DE)
(72) Erfinder: BELLING, Michael, 71272 Renningen (DE); MATT, Alexander, 76646 Bruchsal (DE); KAUFMANN, Christian, 71063 Sindelfingen (DE); DRAYSS, Dominikus, 74731 Walldürn (DE)

(56) Entgegenhaltungen:
- DE-A1- 102018 103 605
- DE-A1- 102018 121 960

## Beschreibung

Die vorliegende Erfindung bezieht sich auf ein Bremssystem für ein Fahrzeug, insbesondere ein elektronisches Bremssystem.

Im Zuge des automatisierten oder autonomen Fahrens von Fahrzeugen aller Art sind beispielsweise Redundanzen zu schaffen. Diese Redundanzen sind insbesondere so auszulegen, dass das Fahrzeug nicht in einen sicherheitskritischen oder unbeherrschbaren Zustand geraten kann. Es wird zum Beispiel dazu übergegangen, Systeme, wie beispielsweise das elektrische Bremssystem EBS oder ABS, mehrfach im Fahrzeug zu platzieren. Eine andere Möglichkeit kann darin bestehen, das System mit ähnlichen Teilsystemen, welche die Funktionalität abbilden können, zu ergänzen. Im Fehlerfall kann das fehlerhafte System abgeschaltet werden und das zweite fehlerfreie System kann die Aufgabe übernehmen und so die Redundanz herstellen. Um beispielsweise ein elektrisches Bremssystem in Nutzfahrzeugen redundant darstellen zu können, würde sich somit insbesondere eine Anzahl von Drucksteuerventilen an jeder Achse oder einem jeweiligen Rad verdoppeln.

Die DE 10 2018 121 960 A1 betrifft eine Vorrichtung zur Entkopplung und/oder zum Schutz vor Ausgleichsströmen zur Verwendung bei gemeinsamer Nutzung zumindest eines elektrischen Aktuators durch eine Mehrzahl von unabhängig spannungsversorgten Steuergeräteinrichtungen in redundanten Systemen für autonomes Fahren. Der elektrische Aktuator umfasst jeweils einen gemeinsamen Anschluss, über den der elektrische Aktuator mit einem gemeinsamen Anschluss anderer elektrischer Aktuatoren koppelbar und schaltbar ist, und zumindest einen dedizierten Anschluss, über den der zumindest eine elektrische Aktuator einzeln bestrombar ist. Eine dem gemeinsamen Anschluss und der Anzahl der dedizierten Anschlüsse aller elektrischen Aktuatoren entsprechende Anzahl von Schalteinrichtungen ist dazu angeordnet, schaltend einen Strom in den zumindest einen elektrischen Aktuator einzusteuern oder nicht einzusteuern. Es ist auch zumindest eine Stromflusssperreinrichtung vorgesehen, die dazu konfiguriert ist, einen unerwünschten Stromfluss zu einer nicht aktiven elektronischen Steuereinheit der ersten und zweiten Steuergeräteinrichtungen zu unterbinden. Die DE 10 2018 103 605 A1 betrifft eine elektropneumatische Ausrüstung eines Fahrzeugs umfassend eine elektropneumatische Parkbremseinrichtung mit einer elektropneumatischen Parkbremssteuereinrichtung, wobei die elektropneumatische Parkbremssteuereinrichtung durch lediglich zwei voneinander unabhängige elektrische Energiequellen mit elektrischer Energie versorgt ist.

Vor diesem Hintergrund ist es die Aufgabe der vorliegenden Erfindung, ein verbessertes Bremssystem für ein Fahrzeug zu schaffen.

Diese Aufgabe wird durch ein Bremssystem für ein Fahrzeug gemäß dem Hauptanspruch gelöst.

Die Erfindung betrifft ein Bremssystem für ein Fahrzeug, wobei das Bremssystem eine Ventilvorrichtung, ein erstes Steuergerät und ein zweites Steuergerät aufweist, wobei die Steuergeräte elektrisch mit der Ventilvorrichtung verbunden sind, weist folgende Merkmale auf:
eine Ventileinheit zum Einstellen eines Drucks eines Arbeitsmediums für das Bremssystem, wobei die Ventileinheit zumindest einen Aktor zum Betätigen der Ventileinheit aufweist;
ein Ventilgehäuse zum Aufnehmen der Ventileinheit; und
ein Fehlerabsicherungsmodul, das außerhalb des Ventilgehäuses angeordnet ist, wobei das Fehlerabsicherungsmodul einen ersten Versorgungsanschluss zum elektrischen Anschluss an das erste Steuergerät, einen zweiten Versorgungsanschluss zum elektrischen Anschluss an das zweite Steuergerät, einen ersten Hauptanschluss zum elektrischen Anschluss an das erste Steuergerät, einen zweiten Hauptanschluss zum elektrischen Anschluss an das zweite Steuergerät, einen elektrisch mit dem ersten Versorgungsanschluss und dem zweiten Versorgungsanschluss verbundenen ersten Verbindungsanschluss zur elektrischen Verbindung mit dem Aktor, einen elektrisch mit dem ersten Hauptanschluss und dem zweiten Hauptanschluss verbundenen zweiten Verbindungsanschluss zur elektrischen Verbindung mit dem Aktor, eine erste elektrische Schutzschaltung und eine zweite elektrische Schutzschaltung aufweist, wobei die erste Schutzschaltung elektrisch zwischen den ersten Versorgungsanschluss und den zweiten Versorgungsanschluss einerseits und den ersten Verbindungsanschluss andererseits geschaltet ist, wobei die zweite Schutzschaltung elektrisch zwischen den zweiten Verbindungsanschluss einerseits und den ersten Hauptanschluss und den zweiten Hauptanschluss andererseits geschaltet ist, wobei mindestens einer der Schutzschaltungen mindestens eine elektrische Sicherungseinrichtung und mindestens ein Diodenelement aufweist, die seriell zum jeweiligen Versorgungs-/Hauptanschluss geschaltet sind,
wobei die Ventileinheit zumindest einen weiteren Aktor zum Betätigen der Ventileinheit aufweist, wobei der zweite Verbindungsanschluss des Fehlerabsicherungsmoduls elektrisch mit dem weiteren Aktor verbunden ist, wobei das Fehlerabsicherungsmodul mindestens einen dritten Versorgungsanschluss zum elektrischen Anschluss an das erste Steuergerät, mindestens einen vierten Versorgungsanschluss zum elektrischen Anschluss an das zweite Steuergerät, zumindest einen elektrisch mit dem dritten Versorgungsanschluss und dem vierten Versorgungsanschluss verbundenen weiteren Verbindungsanschluss zur elektrischen Verbindung mit dem weiteren Aktor und zumindest eine weitere Schutzschaltung aufweist, wobei die weitere Schutzschaltung elektrisch zwischen den dritten Versorgungsanschluss und den vierten Versorgungsanschluss einerseits und den weiteren Verbindungsanschluss andererseits geschaltet ist.

Bei dem Fahrzeug kann es sich um ein Kraftfahrzeug, insbesondere um ein Nutzfahrzeug handeln, beispielsweise um einen Lastkraftwagen oder dergleichen. Das System kann als ein elektronisches Bremssystem oder elektropneumatisches Bremssystem ausgeführt sein. Das erste Steuergerät kann ein primäres Steuergerät sein, wobei das zweite Steuergerät ein redundantes Steuergerät sein kann. Das erste Steuergerät kann einer ersten Funktion oder Assistenzfunktion des Fahrzeugs oder des Bremssystems zugeordnet sein, wobei das zweite Steuergerät einer zweiten Funktion oder Assistenzfunktion des Fahrzeugs oder des Bremssystems zugeordnet sein kann. Die Vorrichtung kann als ein Drucksteuerventil ausgeführt sein. Die Ventileinheit und somit die Ventilvorrichtung kann zumindest ein Magnetventil aufweisen. Der Aktor kann eine widerstandsbehaftete Induktivität umfassen. Das Diodenelement kann eine Diode, eine Halbleiterdiode oder dergleichen aufweisen. Die Sicherungseinrichtung kann eine Schmelzsicherung oder andere elektrische Sicherung, beispielsweise auch eine selbstrückstellende Sicherung oder eine Mehrfach-Sicherung, aufweisen. Das Fehlerabsicherungsmodul kann hierbei angrenzend oder benachbart zu der Ventileinheit angeordnet sein, um eine Unterbrechung der Verbindungsanschlüsse zu verhindern. Der Aktor der Ventileinheit kann beispielsweise Teil von einem Einlassventil der Ventilvorrichtung sein, wobei der weitere Aktor beispielsweise Teil von einem Auslassventil der Ventilvorrichtung sein kann. Es bietet sich der Vorteil, dass bei minimalem Aufwand eine beliebige Anzahl von Aktoren der Ventilvorrichtung abgesichert werden kann.

Gemäß einer Ausführungsform kann der Aktor über den ersten Versorgungsanschluss und den ersten Verbindungsanschluss an ein erstes elektrisches Versorgungspotenzial des ersten Steuergeräts anschließbar sein. Hierbei kann der Aktor über den zweiten Versorgungsanschluss und den ersten Verbindungsanschluss an ein zweites elektrisches Versorgungspotenzial des zweiten Steuergeräts anschließbar sein. Dabei kann der Aktor über den zweiten Verbindungsanschluss und den ersten Hauptanschluss oder über den zweiten Verbindungsanschluss und den zweiten Hauptanschluss an ein gemeinsames elektrisches Massepotenzial der Steuergeräte anschließbar sein. Eine solche Ausführungsform bietet den Vorteil, dass trotz der Nutzung eines gemeinsamen Massepotenzials für den zumindest einen Aktor eine redundante Ansteuerung der Ventilvorrichtung auf vor Fehlern wie beispielsweise Kurzschlüssen und dergleichen geschützte Weise realisiert werden kann.

Auch kann eine Sicherungseinrichtung der ersten Schutzschaltung zwischen den ersten Versorgungsanschluss und den ersten Verbindungsanschluss geschaltet sein. Hierbei kann ein Diodenelement der ersten Schutzschaltung zwischen den zweiten Versorgungsanschluss und den ersten Verbindungsanschluss geschaltet sein. Dabei kann eine Sicherungseinrichtung der zweiten Schutzschaltung zwischen den zweiten Verbindungsanschluss und den ersten Hauptanschluss geschaltet sein. Ferner kann ein Diodenelement der zweiten Schutzschaltung zwischen den zweiten Verbindungsanschluss und den zweiten Hauptanschluss geschaltet sein. Eine solche Ausführungsform bietet den Vorteil, dass eine zuverlässige Absicherung vor Fehlerfällen bei redundanter Auslegung bzw. Ansteuerung erreicht werden kann.

Insbesondere kann eine Durchlassrichtung des Diodenelements der ersten Schutzschaltung von dem zweiten Versorgungsanschluss zu dem ersten Verbindungsanschluss verlaufen. Hierbei kann eine Durchlassrichtung des Diodenelements der zweiten Schutzschaltung von dem zweiten Verbindungsanschluss zu dem zweiten Hauptanschluss verlaufen. Eine solche Ausführungsform bietet den Vorteil, dass ein redundanter Betrieb durch zwei Steuergeräte auf sichere und fehlergeschützte Weise ermöglicht wird.

Dabei kann eine Sicherungseinrichtung der weiteren Schutzschaltung zwischen den dritten Versorgungsanschluss und den weiteren Verbindungsanschluss geschaltet sein. Hierbei kann ein Diodenelement der weiteren Schutzschaltung zwischen den vierten Versorgungsanschluss und den weiteren Verbindungsanschluss geschaltet sein. Eine Durchlassrichtung des Diodenelements der weiteren Schutzschaltung kann von dem vierten Versorgungsanschluss zu dem ersten Verbindungsanschluss verlaufen. Eine solche Ausführungsform bietet den Vorteil, dass eine zuverlässige Absicherung vor Fehlerfällen für einen robusten redundanten Betrieb einer Ventilvorrichtung mit mehreren Aktoren realisiert werden kann.

Ferner kann dabei der weitere Aktor über den dritten Versorgungsanschluss und den weiteren Verbindungsanschluss an das erste elektrische Versorgungspotenzial anschließbar sein. Der weitere Aktor kann über den vierten Versorgungsanschluss und den weiteren Verbindungsanschluss an das zweite elektrische Versorgungspotenzial anschließbar sein. Eine solche Ausführungsform bietet den Vorteil, dass auch der weitere Aktor mit minimalem Aufwand in die Absicherung eingebunden und somit geschützt werden kann.

Ausführungsbeispiele des hier vorgestellten Ansatzes werden in der nachfolgenden Beschreibung mit Bezug zu den Figuren näher erläutert. Es zeigen:
Fig. 1 eine schematische Darstellung eines Bremssystems als System;
Fig. 2 eine schematische Darstellung eines Bremssystems als System;
Fig. 3 eine schematische Darstellung eines Fahrzeugs mit einem Bremssystem gemäß einem Ausführungsbeispiel; und
Fig. 4 eine schematische Darstellung eines Ausführungsbeispiels einer Ventilvorrichtung für ein Bremssystem.

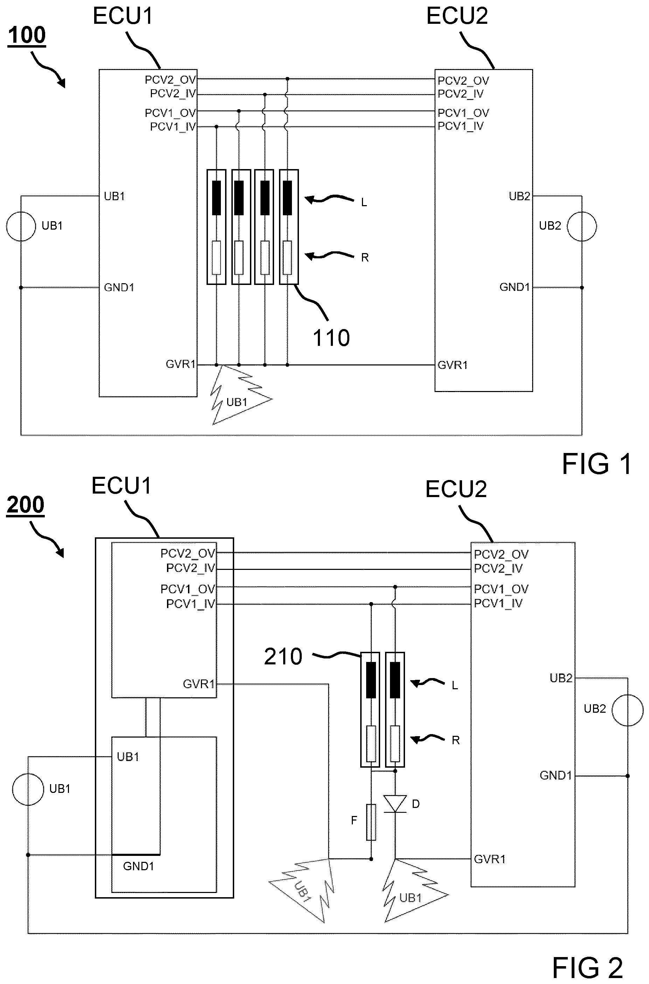

**Fig. 1** zeigt eine schematische Darstellung eines Bremssystems 100 als System. Von dem Bremssystem 100 sind hierbei insbesondere ein erstes Steuergerät oder primäres Steuergerät ECU1, ein zweites Steuergerät oder redundantes Steuergerät ECU2 und eine Mehrzahl von Aktoren 110 von Drucksteuerventilen (PCV = Pressure Control Valve) gezeigt. Mehrere elektronische Steuergeräte, hier das erste Steuergerät ECU1 und das zweite Steuergerät ECU2, zur Bremssteuerung verwenden gemeinsame Drucksteuerventile mit den Aktoren 110, um eine Redundanz in dem Bremssystem 100 darzustellen.

Beispielhaft sind hierbei zwei Drucksteuerventile mit jeweils zwei Aktoren 110 gezeigt.

Jeder der Aktoren 110 ist in der schematischen Darstellung von Fig. 1 als ein Ersatzschaltbild aus einer Induktivität L und einem Widerstand R veranschaulicht. Das erste Steuergerät ECU1 umfasst Anschlüsse PCV1_IV, PCV1_OV, PCV2_IV, PCV2_OV und GVR1 zum elektrischen Anschluss an die Aktoren 110 und Anschlüsse UB1 und GND1 zum Anschluss an eine erste elektrische Spannungsquelle. Das zweite Steuergerät ECU2 umfasst Anschlüsse PCV1_IV, PCV1_OV, PCV2_IV, PCV2_OV und GVR1 zum elektrischen Anschluss an die Aktoren 110 und Anschlüsse UB2 und GND1 zum Anschluss an eine zweite elektrische Spannungsquelle.

Beispielhaft ist ferner ein Kurzschluss von UB1 zur gemeinsam verwendeten Aktuator-Masse gezeigt. In einigen Fehlerfällen kann es zu einem Zustand kommen, bei dem weder das erste Steuergerät ECU1 noch das zweite Steuergerät ECU2 die Aktoren 110 ansteuern können. Bei einem Kurzschluss von UB1 oder UB2 zur gemeinsam verwendeten Aktuatormasse ist eine Ansteuerung nicht mehr möglich. Ein weiterer möglicher Fehlerfall ist der Schluss der Ansteuerung nach UB1 oder UB2. Eine ABS-Regelung beispielsweise ist in diesem Fehlerfall somit weder von der dem ersten Steuergerät ECU1 noch von dem zweiten Steuergerät ECU2 aus möglich. Eine Redundanz eines primären Bremssystems ist somit unter Umständen nicht gegeben.

**Fig. 2** zeigt eine schematische Darstellung eines Bremssystems 200 als System. Das Bremssystem 200 in Fig. 2 entspricht hierbei dem Bremssystem aus Fig. 1 mit Ausnahme dessen, dass lediglich ein Drucksteuerventil mit zwei Aktoren 210 vorgesehen ist, wobei zusätzlich eine Sicherung F und eine Diode D zur Absicherung des Drucksteuerventils vorgesehen sind. Mehrere elektronische Steuergeräte, hier das erste Steuergerät ECU1 und das zweite Steuergerät ECU2, zur Bremssteuerung verwenden ein gemeinsames Drucksteuerventil, welches die zwei Aktoren 210 aufweist, um eine Redundanz in dem Bremssystem 200 darzustellen. Bei einem Kurzschluss von UB1 an der Aktuator-Masse GVR1 des ersten Steuergerätes ECU1 soll die Sicherung F auslösen und somit die Masseleitung GVR1, welche kurzschlussbehaftet ist, trennen. Die Diode D soll im Kurzschlussfall von UB1 auf der Seite des zweiten Steuergeräts des ECU2 schützen.

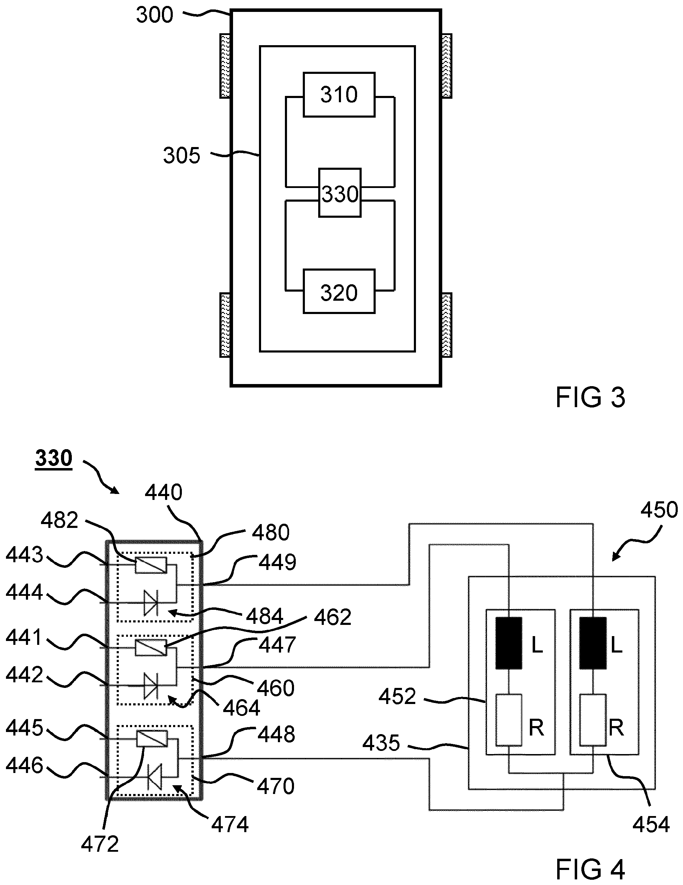

**Fig. 3** zeigt eine schematische Darstellung eines Fahrzeugs 300 mit einem Bremssystem 305 als System gemäß einem Ausführungsbeispiel. Das Bremssystem 305 kann dem Bremssystem aus Fig. 2 ähneln. Das Bremssystem 305 umfasst ein erstes Steuergerät 310, ein zweites Steuergerät 320 und eine Ventilvorrichtung 330. Die Steuergeräte 310 und 320 sind elektrisch mit der Ventilvorrichtung 330 verbunden. Auf die Ventilvorrichtung 330 wird nachfolgend noch detaillierter eingegangen.

**Fig. 4** zeigt eine schematische Darstellung eines Ausführungsbeispiels einer Ventilvorrichtung 330 für ein Bremssystem als System. Das Bremssystem entspricht oder ähnelt hierbei dem Bremssystem aus Fig. 3. Somit umfasst das Bremssystem ein erstes Steuergerät und ein zweites Steuergerät, die elektrisch mit der Ventilvorrichtung 330 verbindbar oder verbunden sind. Die Ventilvorrichtung 330 entspricht oder ähnelt der Ventilvorrichtung aus Fig. 3. Insbesondere ist die Ventilvorrichtung 330 als ein Drucksteuerventil (PCV = Pressure Control Valve) für das Bremssystem ausgeführt.

Die Ventilvorrichtung 330 umfasst ein Fehlerabsicherungsmodul 440, eine Ventileinheit 450 und ein Ventilgehäuse 435. Das Ventilgehäuse 435 ist ausgeformt, um die Ventileinheit 450 aufzunehmen. Die Ventileinheit 450 ist ausgebildet, um einen Druck eines Arbeitsmediums für das Bremssystem einzustellen. Die Ventileinheit 450 umfasst zumindest einen Aktor 452 zum Betätigen der Ventileinheit 450. Die Ventileinheit 450 ist innerhalb des Ventilgehäuses 435 angeordnet. Der zumindest einen Aktor 452 umfasst eine widerstandsbehaftete Induktivität, wie es in der Darstellung von Fig. 4 durch ein Ersatzschaltbild mit einer Induktivität L und einem Widerstand R veranschaulicht ist.

Das Fehlerabsicherungsmodul 440 ist außerhalb des Ventilgehäuses 435 angeordnet. Das Fehlerabsicherungsmodul 440 umfasst einen ersten Versorgungsanschluss 441, einen zweiten Versorgungsanschluss 442, einen ersten Hauptanschluss 445, einen zweiten Hauptanschluss 446, einen ersten Verbindungsanschluss 447, einen zweiten Verbindungsanschluss 448, eine erste elektrische Schutzschaltung 460 und eine zweite elektrische Schutzschaltung 470.

Der erste Versorgungsanschluss 441 dient zum elektrischen Anschluss an das erste Steuergerät des Bremssystems. Der zweite Versorgungsanschluss 442 dient zum elektrischen Anschluss an das zweite Steuergerät des Bremssystems. Der erste Hauptanschluss 445 dient zum elektrischen Anschluss an das erste Steuergerät. Der zweite Hauptanschluss 446 dient zum elektrischen Anschluss an das zweite Steuergerät. Der erste Verbindungsanschluss 447 ist elektrisch mit dem ersten Versorgungsanschluss 441 und dem zweiten Versorgungsanschluss 442 verbunden und dient zur elektrischen Verbindung mit dem Aktor 452. Der zweite Verbindungsanschluss 448 ist elektrisch mit dem ersten Hauptanschluss 445 und dem zweiten Hauptanschluss 446 verbunden und dient zur elektrischen Verbindung mit dem Aktor 452.

Die erste Schutzschaltung 460 ist elektrisch zwischen den ersten Versorgungsanschluss 441 und den zweiten Versorgungsanschluss 442 einerseits und den ersten Verbindungsanschluss 447 andererseits geschaltet. Die erste Schutzschaltung 460 umfasst eine elektrische Sicherungseinrichtung 462 und ein Diodenelement 464, die seriell zum jeweiligen Versorgungs-/Hauptanschluss geschaltet sind. Die zweite Schutzschaltung 470 ist elektrisch zwischen den zweiten Verbindungsanschluss 448 einerseits und den ersten Hauptanschluss 445 und den zweiten Hauptanschluss 446 andererseits geschaltet. Die zweite Schutzschaltung 470 umfasst eine elektrische Sicherungseinrichtung 472 und ein Diodenelement 474, die seriell zum jeweiligen Versorgungs-/Hauptanschluss geschaltet sind. Insbesondere sind die Sicherungseinrichtungen 462 und 472 ausgebildet, um in einem elektrischen Fehlerfall in dem Bremssystem, beispielsweise bei einem Kurzschluss, auszulösen und den Fehlerfall zu verhindern. Ferner sind die Diodenelemente 464 und 474 ausgebildet, um in einem solchen Fehlerfall ebenfalls unzulässigen Stromfluss zu verhindern.

Gemäß einem Ausführungsbeispiel ist die Sicherungseinrichtung 462 der ersten Schutzschaltung 460 zwischen den ersten Versorgungsanschluss 441 und den ersten Verbindungsanschluss 447 geschaltet. Hierbei ist das Diodenelement 464 der ersten Schutzschaltung 460 zwischen den zweiten Versorgungsanschluss 442 und den ersten Verbindungsanschluss 447 geschaltet. Ferner ist die Sicherungseinrichtung 472 der zweiten Schutzschaltung 470 zwischen den zweiten Verbindungsanschluss 448 und den ersten Hauptanschluss 445 geschaltet. Dabei ist das Diodenelement 474 der zweiten Schutzschaltung 470 zwischen den zweiten Verbindungsanschluss 448 und den zweiten Hauptanschluss 446 geschaltet. Beispielsweise verläuft gemäß diesem Ausführungsbeispiel eine Durchlassrichtung des Diodenelements 464 der ersten Schutzschaltung 460 von dem zweiten Versorgungsanschluss 442 zu dem ersten Verbindungsanschluss 447. Auch verläuft eine Durchlassrichtung des Diodenelements 474 der zweiten Schutzschaltung 470 beispielsweise von dem zweiten Verbindungsanschluss 448 zu dem zweiten Hauptanschluss 446.

Insbesondere ist der Aktor 452 über den ersten Versorgungsanschluss 441 und den ersten Verbindungsanschluss 447 an ein erstes elektrisches Versorgungspotenzial des ersten Steuergeräts anschließbar. Auch ist der Aktor 452 über den zweiten Versorgungsanschluss 442 und den ersten Verbindungsanschluss 447 an ein zweites elektrisches Versorgungspotenzial des zweiten Steuergeräts anschließbar. Ferner ist der Aktor 452 über den zweiten Verbindungsanschluss 448 und den ersten Hauptanschluss 445 oder über den zweiten Verbindungsanschluss 448 und den zweiten Hauptanschluss 446 an ein gemeinsames elektrisches Massepotenzial der Steuergeräte anschließbar.

Gemäß der Erfindung umfasst die Ventileinheit 450 zumindest einen weiteren Aktor 454 zum Betätigen der Ventileinheit 450. Hierbei ist der zweite Verbindungsanschluss 448 des Fehlerabsicherungsmoduls 440 elektrisch mit dem weiteren Aktor 454 verbunden. Ferner umfasst gemäß diesem Ausführungsbeispiel das Fehlerabsicherungsmodul 440 mindestens einen dritten Versorgungsanschluss 443 zum elektrischen Anschluss an das erste Steuergerät, mindestens einen vierten Versorgungsanschluss 444 zum elektrischen Anschluss an das zweite Steuergerät, zumindest einen elektrisch mit dem dritten Versorgungsanschluss 443 und dem vierten Versorgungsanschluss 444 verbundenen weiteren Verbindungsanschluss 449 zur elektrischen Verbindung mit dem weiteren Aktor 454 und zumindest eine weitere Schutzschaltung 480. Die weitere Schutzschaltung 480 ist elektrisch zwischen den dritten Versorgungsanschluss 443 und den vierten Versorgungsanschluss 444 einerseits und den weiteren Verbindungsanschluss 449 andererseits geschaltet. Insbesondere ist hierbei die Sicherungseinrichtung 482 der weiteren Schutzschaltung 480 zwischen den dritten Versorgungsanschluss 443 und den weiteren Verbindungsanschluss 449 geschaltet. Das Diodenelement 484 der weiteren Schutzschaltung 480 ist zwischen den vierten Versorgungsanschluss 444 und den weiteren Verbindungsanschluss 449 geschaltet. Lediglich beispielhaft ist die weitere Schutzschaltung 480 identisch zu der ersten Schutzschaltung 460 und/oder der zweiten Schutzschaltung 470. So ist beispielsweise der weitere Aktor 454 über den dritten Versorgungsanschluss 443 und den weiteren Verbindungsanschluss 449 an das erste elektrische Versorgungspotenzial anschließbar. Der weitere Aktor 454 ist über den vierten Versorgungsanschluss 444 und den weiteren Verbindungsanschluss 449 an das zweite elektrische Versorgungspotenzial anschließbar. Der weitere Aktor 454 ist über den zweiten Verbindungsanschluss 448 und den ersten Hauptanschluss 445 oder über den zweiten Verbindungsanschluss 448 und den zweiten Hauptanschluss 446 an das gemeinsame elektrische Massepotenzial der Steuergeräte anschließbar.

Das Drucksteuerventil bzw. die Ventilvorrichtung 330 umfasst beispielsweise ein Einlassventil, welches den Aktor 452 aufweist, und ein Auslassventil, welches den weiteren Aktor 454 aufweist, wobei die Aktoren 452 und 454 an eine gemeinsam verwendete Masse anschließbar oder angeschlossen sind. Ansteuerungsleitungen bzw. Versorgungsleitungen sind separat von den Steuergeräten über das Fehlerabsicherungsmodul 440 zu den Aktoren 452 und 454 geführt.

Gemäß einem nicht beanspruchten Ausführungsbeispiel ist das Fehlerabsicherungsmodul 440 auswechselbar ausgeführt. Zusätzlich oder alternativ sind die Sicherungseinrichtungen 462, 472 und optional 482 der Schutzschaltungen 460, 470 und optional 480 auswechselbar in den Schutzschaltungen 460, 470 und optional 480 angeordnet. Somit kann das Fehlerabsicherungsmodul 440 und/oder jede der Sicherungseinrichtungen 462, 472 und optional 482 einzeln ausgewechselt bzw. erneuert werden, wenn dies erforderlich ist.

Denkbar wäre auch eine diagonale Anordnung der Sicherungseinrichtungen 462, 472 und optional 482 und Diodenelemente 464, 474 und optional 484, sodass im Stromkreis jedes einzelnen Steuergerätes eine Sicherungseinrichtung und ein Diodenelement vorhanden ist, z. B. je eine Sicherungseinrichtung an dem ersten Versorgungsanschluss 441 und dem zweiten Hauptanschluss 446 und je ein Diodenelement an dem zweiten Versorgungsanschluss 442 und dem ersten Hauptanschluss 445.

Unter Bezugnahme auf die vorstehend beschriebenen Figuren sind nachfolgend Ausführungsbeispiele und Vorteile derselben zusammenfassend und mit anderen Worten kurz erläutert.

Abhilfe im Hinblick auf beispielsweise die unter Bezugnahme auf Fig. 1 genannte Fehlerquelle kann somit durch die Schutzschaltungen 460, 470 und optional 480 geschaffen werden, um weitere Fehlerquellen zu vermeiden. So kann beispielsweise das erste Steuergerät 310 (äquivalent zu dem ersten Steuergerät ECU1) uneingeschränkt die Kontrolle der Ventilvorrichtung 330 an das zweite Steuergerät 320 (äquivalent zu dem zweiten Steuergerät ECU2) übergeben. Das erste Steuergerät 310 kann uneingeschränkt die Ventilvorrichtung 330 bzw. deren Aktor 452 oder Aktoren 452 und 454 verwenden. Die Integration der Schutzschaltungen 460, 470 und optional 480 kann somit auch in einen Ansteuerungspfad für die Ventilvorrichtung 330 übernommen werden. Das Fehlerabsicherungsmodul 440 umfasst beispielsweise ein Y-Steckverbindersystem mit integrierten Dioden 464, 474, 484 und Sicherungen 462, 472, 482 in einem vereinten Gehäuse. Es können alle möglichen Steckverbinderarten verwendet werden. Bei einem Defekt kann das Fehlerabsicherungsmodul 440 auf einfache Weise getauscht werden oder können einzelne Sicherungen 462, 472, 482 ersetzt werden.

### BEZUGSZEICHENLISTE

- 100: System; insbesondere Bremssystem
- 110: Aktoren
- GND1: gemeinsame Masse
- GVR1: Hauptanschluss
- L: Induktivität
- PCV1_IV: Versorgungsanschluss
- PCV1_OV: Versorgungsanschluss
- PCV2_IV: Versorgungsanschluss
- PCV2_OV: Versorgungsanschluss
- ECU1: erstes Steuergerät
- R: Widerstand
- ECU2: zweites Steuergerät
- UB1: erstes Versorgungspotenzial
- UB2: zweites Versorgungspotenzial

- 200: System; insbesondere Bremssystem
- 210: Aktoren
- D: Diode
- F: Sicherung

- 300: Fahrzeug
- 305: Bremssystem
- 310: erstes Steuergerät
- 320: zweites Steuergerät
- 330: Ventilvorrichtung

- 435: Ventilgehäuse
- 440: Fehlerabsicherungsmodul
- 441: erster Versorgungsanschluss
- 442: zweiter Versorgungsanschluss
- 443: dritter Versorgungsanschluss
- 444: vierter Versorgungsanschluss
- 445: erster Hauptanschluss
- 446: zweiter Hauptanschluss
- 447: erster Verbindungsanschluss
- 448: zweiter Verbindungsanschluss
- 449: weiterer Verbindungsanschluss
- 450: Ventileinheit
- 452: Aktor
- 454: weiterer Aktor
- 460: erste elektrische Schutzschaltung
- 462: elektrische Sicherungseinrichtung
- 464: Diodenelement
- 470: zweite elektrische Schutzschaltung
- 472: elektrische Sicherungseinrichtung
- 474: Diodenelement
- 480: weitere elektrische Schutzschaltung
- 482: elektrische Sicherungseinrichtung
- 484: Diodenelement
- L: Induktivität
- R: Widerstand

## Patentansprüche

1. Bremssystem (305) für ein Fahrzeug (300), wobei das Bremssystem (305) eine Ventilvorrichtung (330), ein erstes Steuergerät (310) und ein zweites Steuergerät (320) aufweist, wobei die Steuergeräte (310, 320) elektrisch mit der Ventilvorrichtung (330) verbunden sind, wobei die Ventilvorrichtung (330) folgende Merkmale aufweist:
eine Ventileinheit (450) zum Einstellen eines Drucks eines Arbeitsmediums für das Bremssystem (305), wobei die Ventileinheit (450) zumindest einen Aktor (452) zum Betätigen der Ventileinheit (450) aufweist;
ein Ventilgehäuse (435) zum Aufnehmen der Ventileinheit (450); und
ein Fehlerabsicherungsmodul (440), das außerhalb des Ventilgehäuses (435) angeordnet ist, wobei das Fehlerabsicherungsmodul (440) einen ersten Versorgungsanschluss (441) zum elektrischen Anschluss an das erste Steuergerät (310), einen zweiten Versorgungsanschluss (442) zum elektrischen Anschluss an das zweite Steuergerät (320), einen ersten Hauptanschluss (445) zum elektrischen Anschluss an das erste Steuergerät (310), einen zweiten Hauptanschluss (446) zum elektrischen Anschluss an das zweite Steuergerät (320), einen elektrisch mit dem ersten Versorgungsanschluss (441) und dem zweiten Versorgungsanschluss (442) verbundenen ersten Verbindungsanschluss (447) zur elektrischen Verbindung mit dem Aktor (452), einen elektrisch mit dem ersten Hauptanschluss (445) und dem zweiten Hauptanschluss (446) verbundenen zweiten Verbindungsanschluss (448) zur elektrischen Verbindung mit dem Aktor (452), eine erste elektrische Schutzschaltung (460) und eine zweite elektrische Schutzschaltung (470) aufweist, wobei die erste Schutzschaltung (460) elektrisch zwischen den ersten Versorgungsanschluss (441) und den zweiten Versorgungsanschluss (442) einerseits und den ersten Verbindunasanschluss (447) andererseits geschaltet ist, **dadurch gekennzeichnet, dass**
die zweite Schutzschaltung (470) elektrisch zwischen den zweiten Verbindungsanschluss (448) einerseits und den ersten Hauptanschluss (445) und den zweiten Hauptanschluss (446) andererseits geschaltet ist, wobei zumindest eine der Schutzschaltungen (460, 470) mindestens eine elektrische Sicherungseinrichtung (462, 472) und mindestens ein Diodenelement (464, 474) aufweist, die seriell zum jeweiligen Versorgungsanschluss (441, 442) oder Hauptanschluss (445, 446) geschaltet sind, dass die Ventileinheit (450) zumindest einen weiteren Aktor (454) zum Betätigen der Ventileinheit (450) aufweist, wobei der zweite Verbindungsanschluss (448) des Fehlerabsicherungsmoduls (440) elektrisch mit dem weiteren Aktor (454) verbunden ist, dass das Fehlerabsicherungsmodul (440) mindestens einen dritten Versorgungsanschluss (443) zum elektrischen Anschluss an das erste Steuergerät (310), mindestens einen vierten Versorgungsanschluss (444) zum elektrischen Anschluss an das zweite Steuergerät (320), zumindest einen elektrisch mit dem dritten Versorgungsanschluss (443) und dem vierten Versorgungsanschluss (444) verbundenen weiteren Verbindungsanschluss (449) zur elektrischen Verbindung mit dem weiteren Aktor (454) und zumindest eine weitere Schutzschaltung (480) aufweist, und dass die weitere Schutzschaltung (480) elektrisch zwischen den dritten Versorgungsanschluss (443) und den vierten Versorgungsanschluss (444) einerseits und den weiteren Verbindungsanschluss (449) andererseits geschaltet ist.

2. Bremssystem (305) gemäß Anspruch 1, wobei der Aktor (452) über den ersten Versorgungsanschluss (441) und den ersten Verbindungsanschluss (447) an ein erstes elektrisches Versorgungspotenzial des ersten Steuergeräts (310) anschließbar ist, wobei der Aktor (452) über den zweiten Versorgungsanschluss (442) und den ersten Verbindungsanschluss (447) an ein zweites elektrisches Versorgungspotenzial des zweiten Steuergeräts (320) anschließbar ist, wobei der Aktor (452) über den zweiten Verbindungsanschluss (448) und den ersten Hauptanschluss (445) oder über den zweiten Verbindungsanschluss (448) und den zweiten Hauptanschluss (446) an ein gemeinsames elektrisches Massepotenzial der Steuergeräte (310, 320) anschließbar ist.

3. Bremssystem (305) gemäß einem der vorangegangenen Ansprüche, wobei eine Sicherungseinrichtung (462) der ersten Schutzschaltung (460) zwischen den ersten Versorgungsanschluss (441) und den ersten Verbindungsanschluss (447) geschaltet ist, wobei ein Diodenelement (464) der ersten Schutzschaltung (460) zwischen den zweiten Versorgungsanschluss (442) und den ersten Verbindungsanschluss (447) geschaltet ist, wobei eine Sicherungseinrichtung (472) der zweiten Schutzschaltung (470) zwischen den zweiten Verbindungsanschluss (448) und den ersten Hauptanschluss (445) geschaltet ist, wobei ein Diodenelement (474) der zweiten Schutzschaltung (470) zwischen den zweiten Verbindungsanschluss (448) und den zweiten Hauptanschluss (446) geschaltet ist.

4. Bremssystem (305) gemäß Anspruch 3, wobei eine Durchlassrichtung des Diodenelements (464) der ersten Schutzschaltung (460) von dem zweiten Versorgungsanschluss (442) zu dem ersten Verbindungsanschluss (447) verläuft, wobei eine Durchlassrichtung des Diodenelements (474) der zweiten Schutzschaltung (470) von dem zweiten Verbindungsanschluss (448) zu dem zweiten Hauptanschluss (446) verläuft.

5. Bremssystem (305) gemäß einem der vorangegangenen Ansprüche, wobei eine Sicherungseinrichtung (482) der weiteren Schutzschaltung (480) zwischen den dritten Versorgungsanschluss (443) und den weiteren Verbindungsanschluss (449) geschaltet ist, wobei ein Diodenelement (484) der weiteren Schutzschaltung (480) zwischen den vierten Versorgungsanschluss (444) und den weiteren Verbindungsanschluss (449) geschaltet ist.

6. Bremssystem (305) gemäß Anspruch 2, wobei der weitere Aktor (454) über den dritten Versorgungsanschluss (443) und den weiteren Verbindungsanschluss (449) an das erste elektrische Versorgungspotenzial anschließbar ist, wobei der weitere Aktor (454) über den vierten Versorgungsanschluss (444) und den weiteren Verbindungsanschluss (449) an das zweite elektrische Versorgungspotenzial anschließbar ist.

## Claims

1. Braking system (305) for a vehicle (300), wherein the braking system (305) has a valve device (330), a first control unit (310) and a second control unit (320), wherein the control units (310, 320) are electrically connected to the valve device (330), wherein the valve device (330) has the following features:
a valve unit (450) for setting a pressure of a working medium for the braking system (305), wherein the valve unit (450) has at least one actuator (452) for actuating the valve unit (450);
a valve housing (435) for accommodating the valve unit (450); and
an error protection module (440) which is arranged outside the valve housing (435), wherein the error protection module (440) has a first supply port (441) for the electrical attachment to the first control unit (310), a second supply port (442) for the electrical attachment to the second control unit (320), a first main port (445) for the electrical attachment to the first control unit (310), a second main port (446) for the electrical attachment to the second control unit (320), a first connection port (447), which is electrically connected to the first supply port (441) and to the second supply port (442), for the electrical connection to the actuator (452), a second connection port (448), which is electrically connected to the first main port (445) and to the second main port (446), for the electrical connection to the actuator (452), a first electric protective circuit (460) and a second electric protective circuit (470), wherein the first protective circuit (460) is electrically connected between the first supply port (441) and the second supply port (442) on one side and the first connection port (447) on the other side, **characterized in that**
the second protective circuit (470) is electrically connected between the second connection port (448) on one side and the first main port (445) and the second main port (446) on the other side, wherein at least one of the protective circuits (460, 470) has at least one electrical fuse device (462, 472) and at least one diode element (464, 474) that are connected in series to the respective supply port (441, 442) or main port (445, 446), **in that**
the valve unit (450) has at least one further actuator (454) for actuating the valve unit (450), wherein the second connection port (448) of the error protection module (440) is electrically connected to the further actuator (454),
wherein the error protection module (440) has at least one third supply port (443) for the electrical attachment to the first control unit (310), at least one fourth supply port (444) for the electrical attachment to the second control unit (320), at least one further connection port (449), which is electrically connected to the third supply port (443) and the fourth supply port (444), for the electrical connection to the further actuator (454), and at least one further protective circuit (480), and **in that**
the further protective circuit (480) is electrically connected between the third supply port (443) and the fourth supply port (444), on one side, and the further connection port (449), on the other side.

2. Braking system (305) according to claim 1, wherein the actuator (452) is attachable to a first electric supply potential of the first control unit (310) via the first supply port (441) and the first connection port (447), wherein the actuator (452) is attachable to a second electric supply potential of the second control unit (320) via the second supply port (442) and the first connection port (447), wherein the actuator (452) is attachable to a common electric ground potential of the control units (310, 320) via the second connection port (448) and the first main port (445) or via the second connection port (448) and the second main port (446).

3. Braking system (305) according to any one of the preceding claims, wherein a fuse device (462) of the first protective circuit (460) is connected between the first supply port (441) and the first connection port (447), wherein a diode element (464) of the first protective circuit (460) is connected between the second supply port (442) and the first connection port (447), wherein a fuse device (472) of the second protective circuit (470) is connected between the second connection port (448) and the first main port (445), wherein a diode element (474) of the second protective circuit (470) is connected between the second connection port (448) and the second main port (446).

4. Braking system (305) according to claim 3, wherein a forward direction of the diode element (464) of the first protective circuit (460) runs from the second supply port (442) to the first connection port (447), wherein a forward direction of the diode element (474) of the second protective circuit (470) runs from the second connection port (448) to the second main port (446).

5. Braking system (305) according to any one of the preceding claims, wherein a fuse device (482) of the further protective circuit (480) is connected between the third supply port (443) and the further connection port (449), wherein a diode element (484) of the further protective circuit (480) is connected between the fourth supply port (444) and the further connection port (449).

6. Braking system (305) according to claim 2, wherein the further actuator (454) is attachable to the first electric supply potential via the third supply port (443) and the further connection port (449), wherein the further actuator (454) is attachable to the second electric supply potential via the fourth supply port (444) and the further connection port (449).

## Revendications

1. Système de freinage (305) pour un véhicule (300), dans lequel le système de freinage (305) présente un dispositif de soupape (330), un premier appareil de commande (310) et un second appareil de commande (320), dans lequel les appareils de commande (310, 320) sont électriquement connectés au dispositif de soupape (330), dans lequel le dispositif de soupape (330) présente les caractéristiques suivantes :
une unité de soupape (450) destinée au réglage d'une pression d'un fluide de travail pour le système de freinage (305), dans lequel l'unité de soupape (450) présente au moins un actionneur (452) destiné à l'actionnement de l'unité de soupape (450) ;
un boîtier de soupape (435) destiné à la réception de l'unité de soupape (450) ; et
un module de protection contre les défauts (440) qui est agencé en dehors du boîtier de soupape (435), dans lequel le module de protection contre les défauts (440) présente une première borne d'alimentation (441) pour le raccordement électrique au premier appareil de commande (310), une deuxième borne d'alimentation (442) pour le raccordement électrique au second appareil de commande (320), une première borne principale (445) pour le raccordement électrique au premier appareil de commande (310), une seconde borne principale (446) pour le raccordement électrique au second appareil de commande (320), une première borne de connexion (447) connectée électriquement à la première borne d'alimentation (441) et à la deuxième borne d'alimentation (442) pour la connexion électrique à l'actionneur (452), une deuxième borne de connexion (448) connectée électriquement à la première borne principale (445) et à la seconde borne principale (446) pour la connexion électrique avec l'actionneur (452), un premier circuit de protection (460) électrique et un second circuit de protection (470) électrique, dans lequel le premier circuit de protection (460) est électriquement commuté entre la première borne d'alimentation (441) et la deuxième borne d'alimentation (442) d'une part et la première borne de connexion (447) d'autre part, **caractérisé en ce que**
le second circuit de protection (470) est électriquement commuté entre la deuxième borne de connexion (448) d'une part et la première borne principale (445) et la seconde borne principale (446) d'autre part, dans lequel au moins un des circuits de protection (460, 470) présente au moins un dispositif de protection (462, 472) électrique et au moins un élément de diode (464, 474) qui sont montés en série avec la borne d'alimentation (441, 442) ou la borne principale (445, 446) respective, **en ce que**
l'unité de soupape (450) présente au moins un actionneur supplémentaire (454) pour l'actionnement de l'unité de soupape (450), dans lequel la deuxième borne de connexion (448) du module de protection contre les défauts (440) est électriquement connectée à l'actionneur supplémentaire (454), **en ce que**
le module de protection contre les défauts (440) présente au moins une troisième borne d'alimentation (443) pour le raccordement électrique au premier appareil de commande (310), au moins une quatrième borne d'alimentation (444) pour le raccordement électrique au second appareil de commande (320), au moins une borne de connexion (449) supplémentaire connectée électriquement à la troisième borne d'alimentation (443) et à la quatrième borne de connexion (449) pour la connexion électrique avec l'actionneur supplémentaire (454) et au moins un circuit de protection supplémentaire (480), et **en ce que**
le circuit de protection supplémentaire (480) est électriquement commuté entre la troisième borne d'alimentation (443) et la quatrième borne d'alimentation (444) d'une part et la borne de connexion supplémentaire (449) d'autre part.

2. Système de freinage (305) selon la revendication 1, dans lequel l'actionneur (452) peut être raccordé à un premier potentiel d'alimentation électrique du premier appareil de commande (310) par le biais de la première borne d'alimentation (441) et de la première borne de connexion (447), dans lequel l'actionneur (452) peut être raccordé à un second potentiel d'alimentation électrique du second appareil de commande (320) par le biais de la deuxième borne d'alimentation (442) et de la première borne de connexion (447), dans lequel l'actionneur (452) peut être raccordé à un potentiel de masse électrique commun des appareils de commande (310, 320) par le biais de la deuxième borne principale (448) et de la première borne principale (448) ou par le biais de la deuxième borne de connexion (448) et de la seconde borne principale (446).

3. Système de freinage (305) selon l'une quelconque des revendications précédentes, dans lequel un équipement de sécurité (462) du premier circuit de protection (460) est commuté entre la première borne d'alimentation (441) et la première borne de connexion (447), dans lequel un élément de diode (464) du premier circuit de protection (460) est commuté entre la deuxième borne d'alimentation (442) et la première borne de connexion (447), dans lequel un équipement de sécurité (472) du second circuit de protection (470) est commuté entre la deuxième borne de connexion (448) et la première borne principale (445), dans lequel un élément de diode (474) du second circuit de protection (470) est commuté entre la deuxième borne de connexion (448) et la seconde borne principale (446).

4. Système de freinage (305) selon la revendication 3, dans lequel un sens passant de l'élément de diode (464) du premier circuit de protection (460) s'étend de la deuxième borne d'alimentation (442) à la première borne de connexion (447), dans lequel un sens passant de l'élément de diode (474) du second circuit de protection (470) s'étend de la deuxième borne de connexion (448) à la seconde borne principale (446).

5. Système de freinage (305) selon l'une quelconque des revendications précédentes, dans lequel un équipement de sécurité (482) du circuit de protection supplémentaire (480) est commuté entre la troisième borne d'alimentation (443) et la borne de connexion (449) supplémentaire, dans lequel un élément de diode (484) du circuit de protection supplémentaire (480) est commuté entre la quatrième borne d'alimentation (444) et la borne de connexion supplémentaire (449).

6. Système de freinage (305) selon la revendication 2, dans lequel l'actionneur supplémentaire (454) peut être raccordé au premier potentiel d'alimentation électrique par le biais de la troisième borne d'alimentation (443) et de la borne de connexion supplémentaire (449), dans lequel l'actionneur supplémentaire (454) peut être raccordé au second potentiel d'alimentation électrique par le biais de la quatrième borne d'alimentation (444) et de la borne de connexion supplémentaire (449).
